# EUROPEAN PATENT SPECIFICATION

(11) **EP 3 474 657 B1**
(45) Date of publication and mention of the grant of the patent: **01.09.2021**
(21) Application number: 17740808.5
(22) Date of filing: 23.06.2017
(51) Int. Cl.: A01G 9/14

(54) **METHOD FOR GROWING PLANTS IN A GREENHOUSE, A SYSTEM FOR STORING A CONTAINER WITHIN A GREENHOUSE AND A CONVEYOR MODULE**
VERFAHREN ZUM ZÜCHTEN VON PFLANZEN IN EINEM GEWÄCHSHAUS, SYSTEM ZUR AUFBEWAHRUNG EINES BEHÄLTERS IN EINEM GEWÄCHSHAUS UND FÖRDERERMODUL
PROCÉDÉ PERMETTANT DE FAIRE CROÎTRE DES PLANTES DANS UNE SERRE, SYSTÈME PERMETTANT DE STOCKER UN CONTENANT DANS UNE SERRE ET MODULE TRANSPORTEUR

(30) Priority: 23.06.2016 NL 2017040
(43) Date of publication of application: 01.05.2019
(73) Proprietor: Logiqs B.V., 2676 LV Maasdijk (NL)
(72) Inventor: VAN STAALDUINEN, Gerrit Johannes, 2676 LT Maasdijk (NL)
(74) Representative: Altenburg, Bernardus Stephanus Franciscus
(86) International application number: PCT/NL2017/050422
(87) International publication number: WO 2017/222383

(56) References cited:
- EP-A1- 0 511 715
- WO-A1-2014/199917
- NL-A- 9 300 418
- US-B1- 6 412 216

## Description

### FIELD OF THE INVENTION

The invention is in the field of methods for growing plants in a greenhouse and more specifically in the field of systems for storing plants in the greenhouse.

### BACKGROUND OF THE INVENTION

Methods for growing plants in a greenhouse are known in the art. WO 2014/199917 A1, US 6 412 216 B1 and NL 9 300 418 A illustrate examples of methods for growing plants in a greenhouse. Said methods use systems for storing containers within the greenhouse, the containers containing the plants. These systems comprise a conveyor system arranged for conveying the container within the greenhouse and a frame arranged for storing the container in a storing zone defined by said frame. In this way, these systems allow for automation of the method.

In order to make the method more cost-effective, it is required to increase the storage capacity of the system within the greenhouse while still having an automated system. However, the storing zone provided by the frame is dependent of the size of the greenhouse. The present application tries to improve these known systems for providing a more cost-effective method.

### SUMMARY OF THE INVENTION

To this end, a first aspect of the invention relates to a method for growing plants in a greenhouse, the method using:
a) at least a container for supporting the plants; and
b) a system for storing the container within the greenhouse for growing the plants, the system comprising:
   i) a conveyor system arranged for conveying the container within the greenhouse in a conveying zone; and
   ii) a frame arranged for storing the container in a storing zone, the frame being adjacent to said conveyor system;
   and the method comprises the steps of:
   - arranging the plants in the container;
   - conveying, via the conveyor system, the container supporting the plants along the conveying zone to a sub-zone of said conveying zone adjacent to the frame, said sub-zone conveying the container in a first vertical position;
   wherein the system further comprises:
   i) lifting means for lifting said container to a second vertical position above the sub-zone of the conveying zone such that the distance in the vertical between the first vertical position and the second vertical position is bigger than a vertical size of said container including the plants; and
   ii) storing means for storing the container in the second vertical position;
      and wherein in the method the container is lifted from the first vertical position to the second vertical position by the lifting means and is then stored in said second vertical position supported by the storing means such that a further container may be conveyed under the container to the sub-zone via the conveying means.

A second aspect of the invention relates to a system for storing a container within a greenhouse, the system comprising:
i) a conveyor system arranged for conveying the container in a conveying zone; and;
ii) a frame arranged for supporting the container in a storing zone,
wherein the frame is adjacent to said conveyor system such that the conveying zone defines a sub-zone adjacent to said frame, the sub-zone arranged for conveying the container in a first vertical position;
wherein the system further comprises:
i) lifting means for lifting said container from the first vertical position to a second vertical position higher than the first vertical position and above the sub-zone of the conveying zone; and
ii) storing means for storing the container in the second vertical position, wherein the storing means is arranged in the system such that said storing means is above the sub-zone when storing the container;
   and wherein the conveyor system comprises at least a conveyor module, the conveyor module having a structure arranged for supporting:
   i) conveying means arranged for conveying a container, the conveying means defining the sub-zone of the conveying zone; and
   ii) lifting means comprising an arm connected to the storing means, the arm arranged for moving said storing means from a first position to a second position such that said storing means moves at least a part of the container from the first vertical position to the second vertical position;
      wherein the lifting means is arranged in the structure such that the arm is outside the conveying zone when moving the storing means from the first position to the second position.

Finally, a third aspect of the invention relates to a conveyor module for a conveyor system, the conveyor module having a structure arranged for supporting:
i) conveying means arranged for conveying a container, the conveying means defining a sub-zone suitable for conveying a container in a first vertical position relative to the structure;
ii) lifting means comprising an arm connected to a storing means, the arm arranged for moving the storing means from a first position to a second position such that said storing means is capable of moving at least a part of the container from the first vertical position to a second vertical position higher than the first vertical position and above the sub-zone;
   wherein the lifting means is arranged in the structure such that the arm is outside the sub-zone when moving the storing means from the first position to the second position.

### DETAILED DESCRIPTION OF THE INVENTION

One aspect of the invention concerns a method according to claim 1. In this way, a more cost-effective method for growing plants in a greenhouse is provided.

In the method, a system is used for storing within the greenhouse the container where the plants are arranged. In general, the system allows for storing a plurality of containers. The plants are understood to be at any growing state, including seeds in pots.

The system comprises at least a frame arranged adjacent to a conveyor system, the frame arranged for storing the container in a storing zone. In general there is a plurality of frames arranged at both sides of the conveyor means. The conveyor system is used for conveying the container within the greenhouse towards the frame, where said conveyor may be stored at the storing zone defined by said frame. In general the container is a rolling container comprising a rolling system designed for cooperating with guiding means, such as a bar or a plurality of bars, arranged in the storing zone and/or conveyor system for easy movement of said rolling container within the system.

The conveyor system defines a conveying zone in which the container is conveyed via conveying means. The frame is arranged adjacent to the conveyor system to define a sub-zone of the conveying zone. In the method, the container is conveyed to the sub-zone where the container is conveyed in a first vertical position defined by the conveying means arranged in said sub-zone of the conveying zone. There, the container is lifted from the first vertical position to a second vertical position higher than the first vertical position. The second vertical position is also above the sub-zone of the conveying zone, although it is important to note that there is no need that said second vertical position has to be exactly above the first vertical position in a vertical direction. The lifting is achieved by lifting means arranged for such purpose. Then, the container is stored in said second vertical position above the sub-zone of the conveying zone supported by storing means.

The distance in the vertical direction between the container in the first vertical position and said container in the second vertical position is bigger than a vertical size of said container already supporting the plants. Thus, a further container also comprising plants may be conveyed via the conveyor system along the conveying zone to the sub-zone even if the container is stored in the second vertical position.

The container may thus also be stored not only in the storing zone defined by the frame, but also above the conveying zone, while the conveyor system is still operational for conveying a further container. In this way the storing capacity provided by the system within the greenhouse is increased and the method for growing plants is more cost-effective since the room within the greenhouse used for growing plants is increased accordingly. It is important to note that storing means refers to means for keeping the container in said second vertical position when the conveying zone is available for conveying the further container beyond the first vertical position. Thus, the storing means are arranged for storing the container in the s second vertical position above the sub-zone.

The lifting means may be arranged in the frame, the conveyor means or even may be detached from said components of the system. It is preferred that said lifting means are arranged in the conveyor means, e.g. a module of said conveyor means. The lifting means may lift the container to the second vertical position when said lifting means are moved from a first position to a second position. Then, once the container is stored by the storing means, the lifting means return to the first position to allow a further container to be conveyed along the conveying zone. In a more specific example, said lifting means may also comprise the storing means and, therefore, the lifting means may also store the container in the second vertical position.

In an embodiment, the frame is arranged adjacent to a side of the conveyor system to define a proximal end with respect to said side; wherein the system also comprises a further frame arranged for supporting at least one container in a further storing zone, the further frame being adjacent to a further side of the conveyor system opposite to the side where the frame is adjacent such that said further frame defines a further proximal end with respect to said further side; wherein the storing means are arranged in the further frame for extending from the further proximal end towards the proximal end; and wherein in the method, the storing means extends from the further proximal end towards the proximal end when the container has been lifted to the second vertical position and said container is supported by said storing means in said second vertical position. In this way, the storing means are provided in an easy way and there is no need for spending energy to store the container in the second vertical position. In general, the frame and the further frame are arranged with respect to each other such that the proximal end and the further proximal end are opposing each other.

In an embodiment, the system is arranged such that the storing zone and/or the further storing zone is/are adjacent to the container when said container is supported at the second vertical position and wherein the system further comprises means arranged for moving the container being stored on the second vertical position towards the storing zone and/or further storing zone, and in the method said container is moved from the second vertical position to the storing zone or the further storing zone by said means. In this way, the storing zone is arranged at a substantially similar height with respect to the container in the second vertical position, and said container may be moved from the second vertical position to the storing zone defined by the frame if needed.

Another aspect of the disclosure concerns a system for storing a container according to claim 5. In this way, the storing capacity provided by the system is increased and may be used for providing a more cost-effective method for growing plants.

The system comprises at least a frame arranged adjacent to a conveyor system, the frame arranged for storing at least a container in a storing zone. In general there is a plurality of frames arranged at both sides of the conveyor system. The system may also comprise guiding means, such a bar or a plurality of bars arranged in the storing zone and/or conveyor system and designed for cooperating with a rolling system arranged in the container for easy movement of said container within the system. This container is known in the art as rolling container.

The conveyor system is arranged for conveying the container towards the frame where said container may be stored at the storing zone defined by said frame. The conveyor system is a structure comprising conveying means for conveying containers along the conveying zone. Part of the conveying means also defines a sub-zone of the conveying zone adjacent to the frame where the container may be conveyed in a first vertical position. The conveyor means may be plates, rollers, belts, or any means known in the art for conveying the containers in an operational position such that the container is capable of transporting plants. In general, all the conveying means are arranged in the structure of the conveyor system such that the container may be conveyed along all the conveying zone in the first vertical position.

The system comprises lifting means for lifting a container placed in the sub-zone from the first vertical position to a second vertical position higher than the first vertical position. Further, the second vertical position is above the sub-zone, although it is important to note that there is no need that the container in said second vertical position has to be exactly above the same container when in the first vertical position in a vertical direction.

The system further comprises storing means for storing the container when said container is in the second vertical position above the conveying zone. Thus, the container may also be stored not only in the storing zone defined by the frame, but also above the conveying zone, while the conveyor system is still operational for conveying a further container. In this way the storing capacity provided by the system is increased. This is possible because said storing means is arranged in the system such that said storing means is outside the conveying zone and thus to the sub-zone when storing the container in the second vertical position. The storing means is arranged for storing the container at a second vertical position at least 15 cm higher in a vertical direction than the first vertical position, preferably at least 20 cm and more preferably within 30 cm and 50 cm. Thus, the lifting means is arranged for lifting a container said vertical distances.

The conveyor system comprises at least a conveyor module, the conveyor module having a structure arranged for supporting:
i) conveying means arranged for conveying a container, the conveying means defining the sub-zone of the conveying zone; and
ii) lifting means comprising an arm connected to the storing means, the arm arranged for moving said storing means from a first position to a second position such that said storing means moves at least a part of the container from the first vertical position to the second vertical position;
   wherein the lifting means is arranged in the structure such that the arm is outside the conveying zone when moving the storing means from the first position to the second position. In this way, a system according to the invention may be easily provided by inserting at least one conveyor module in the conveyor system.

The structure defining the conveyor module comprises the lifting means, said lifting means comprising an arm connected to the storing means. The arm is arranged for moving the storing means from a first position to a second position, in general via an actuator that may be connected to the arm and since the arm is arranged outside the conveying zone it does not interfere with a further container being conveyed. The storing means may comprise a bar, plate or any other organ suitable for supporting a container or a section of a container in a stable way. When the arm moves the storing means from the first position to the second position, the storing means is capable of lifting the container or a section of the container to the second vertical position when present in the sub-zone in the first vertical position.

In a more specific example, the lifting means comprises a further arm connected to the structure such that said further arm is also outside the conveying zone and opposite to the arm. The further arm may comprise a further storing means arranged also opposite to the storing means connected to the arm. It may also be possible that the support means of the arm is also connected to the further support arm. In any case the arm and the further arm may cooperate for moving the container from the first vertical position to the second vertical position more easily and in a more stable way.

The conveyor module is the structure as defined above that may be part of a conveyor system. In a more specific example, the conveyor system comprises a plurality of conveyor modules arranged in series and adjacent to the same frame in such a way that said plurality may cooperate for lifting the same container from the first vertical position to the second vertical position, and from the second vertical position it may be transferred to the storing zone defined by said frame.

In an embodiment, the frame is arranged adjacent to a side of the conveyor system to define a proximal end with respect to said side; wherein the system also comprises a further frame arranged for supporting at least one container in a further storing zone, the further frame being adjacent to a further side of the conveyor system opposite to the side where the frame is adjacent such that said further frame defines a further proximal end with respect to said further side; and wherein the storing means is arranged in the further frame for extending from the further proximal end towards the proximal end. In this way, the storing means are provided in an easy way and there is no need for spending energy to store the container in the second vertical position.

The support means may comprise support bars arranged in the frame for extending by rotation or by lineal translation of said support bars from the further proximal end towards the proximal end of the frame. The movement of the bars is obtained by the use of actuators. In general, the frame may comprise means for receiving the support bars to support the weight of a container when being supported by said support bars.

In an embodiment, the arm is arranged for rotating about an axis transverse to a conveying direction provided by the conveying means to move the storing means from the first position to the second position. In this way, the conveyor module may be designed such that the sub-zone may be relatively low with respect to a ground supporting said conveyor module while the lifting means may push a container to a second vertical position relatively high relative to said ground.

In an embodiment, the storing means of the lifting means of the conveyor module is a further bar arranged for receiving the rolling system of the rolling container when the arm moves from the first position to the second position and wherein said conveyor module has been arranged such that the further bar is aligned with the bar of the frame and further frame to provide guiding when said rolling container is moved from the second vertical position to said storing zone or said further storing zone. In this way, a rolling container may be easily guided when stored in the second vertical position towards the storing zone to be stored in said storing zone.

It is preferred that the arm comprises a flange arranged for cooperating with a receiving organ arranged in the frame to limit the movement of the storing means provided by the movement of the arms between the first position and the second position. In this way, at least the second vertical position may be well defined, which may be critical if the storing zone of the frame is arranged such that the container may be stored at the same vertical height as when stored in the second vertical position, making easy the transfer to said storing zone. Further, in this way, if the system comprises guide means at the storing zone of the frame, said guide means may be easily aligned with the further bar when lifted to the second position.

Another aspect of the invention concerns a conveyor module according to claim 10. In this way, the conveyor module may provide a conveyor system having storing capacity without losing its conveying purpose. Further, the conveyor system having the conveyor module may be used in a conveyor system for storing plants in a house to increase the storing capacity of said system.

In an embodiment, the arm is arranged for rotating about an axis transverse to a conveying direction provided by the conveying means to move the storing means from the first position to the second position. In this way, the conveyor module may be designed such that the conveying zone may be relatively low with respect to a ground supporting said conveyor module while the lifting means may push a container to a second vertical position relatively high relative to said ground.

In an embodiment, the storing means is a bar arranged for receiving a rolling system of a rolling container when said rolling container is in the first vertical position and the arm moves from the first position to the second position. In this way, the risk of movement of a rolling container being lifted is reduced and said rolling container may be lifted in a more stable way.

### BRIEF DESCRIPTION OF THE DRAWINGS

For the purpose of illustrating the invention, the drawings show aspects of one or more embodiments of said invention. However, it should be understood that the present invention is not limited to the precise arrangements and instrumentalities shown in the drawings, wherein:
Fig. 1A and 1B are an example of a conveyor module according to the invention;
Fig. 2 is an example of a system for storing plants in a greenhouse, the system comprising the conveyor module depicted in figures 1A and 1B;
Fig. 3 is a method for growing plants in a greenhouse using the system depicted in figure 2.
Fig. 4A and 4B are a top view of another example of a system for storing plants in a greenhouse;

### DETAILED DESCRIPTION OF THE DRAWINGS

It should be noted that items which have the same reference numbers in different figures, have the same structural features and the same functions. Where the function and/or structure of such item has been explained, there is no necessity for repeated explanation thereof in the detailed description.

The scope of the invention is achieved by the appended claims.

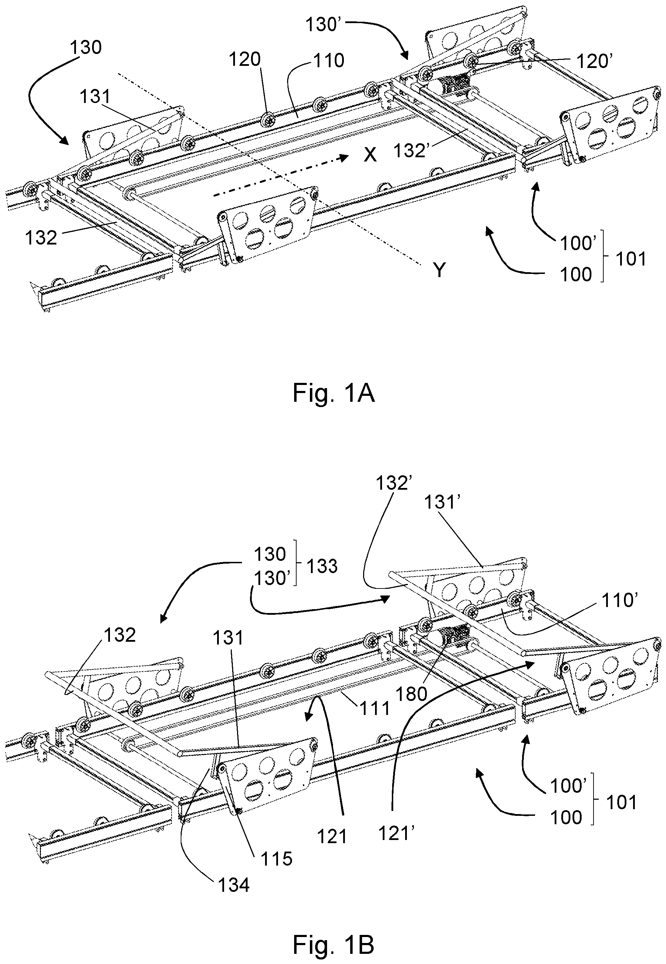

Figure 1A and 1B depict a conveyor module 100 and a conveyor module 100' according to the invention. The conveyor module 100 comprises a structure 110 arranged for supporting a plurality of conveying means 120 and a lifting means 130. Similarly, the conveyor module 100' comprises a structure 110' arranged for supporting a plurality of conveying means 120' and a lifting means 130'.

In the present example, the conveyor means 120 and 120' are flanged wheels 120 and 120' arranged for conveying rolling containers. The conveyor means 120 define a conveying zone 121 for the conveyor module 100 and the conveyor means 120' define a conveying zone 121' for the conveyor module 100'. However, it is important to be noted that the conveying means 120 and 120' may also include rollers, belts or any other means.

The lifting means 130 of the conveyor module 100 comprises a pair of arms 131 arranged at both sides of the conveying zone 121 and opposite to each other. Each of the arms 131 is connected at one end to a support means 132, in the present example a support-bar 132, and at the other end to an actuator 180. The support-bar 132 may be arranged in a first position, as depicted in figure 1A, in which the support arm 132 is below the conveying means 120. Said support-bar 132 may also be arranged in a second position, as depicted in figure 1B, in which said support-bar 132 is above the conveying means 120.

The movement of the support-bar 132 is achieved by a rotational movement of the arms 131 between about a rotational axis Y transverse to the conveying direction X provided by the flanged wheels 120. Said rotational movement of the arms 131 is provided thus by the actuator 180, as will be shown below. Also, the movement of the arm 131 is limited by a flange 134 arranged in said arm for being received by a further flange (not depicted) arranged in a plate 115 when the support-bar 132 is at the second position. Thus, the movement of said bar cannot go beyond said second position.

Similarly, the conveyor module 100' comprises a lifting means 130' arranged in the same way as the lifting means 130 of the conveyor module 100. Thus, the lifting means 130' comprises a pair of arms 131' connected to a support-bar 132' capable of moving between the first position and the second position.

The conveyor module 100 and 100' are arranged for cooperating together thanks to a driving system 111 to form a conveyor-pair 101. The driving system 111 connects the actuator 180 to the arms 131 and 131' of the lifting systems 130 and 130'. In this way the lifting means 130 and 130' of each conveyor module 100 and 100' are synchronized and move the support-bars 132 and 132' together between the first position and the second position forming a lifting-pair 133. It is important to note that instead of two conveyor modules each of them having a lifting means that cooperate together, a single conveyor module having two lifting means may be used instead, the conveyor module having grooves in the structure for receiving the support-bars when the arms are in the first position.

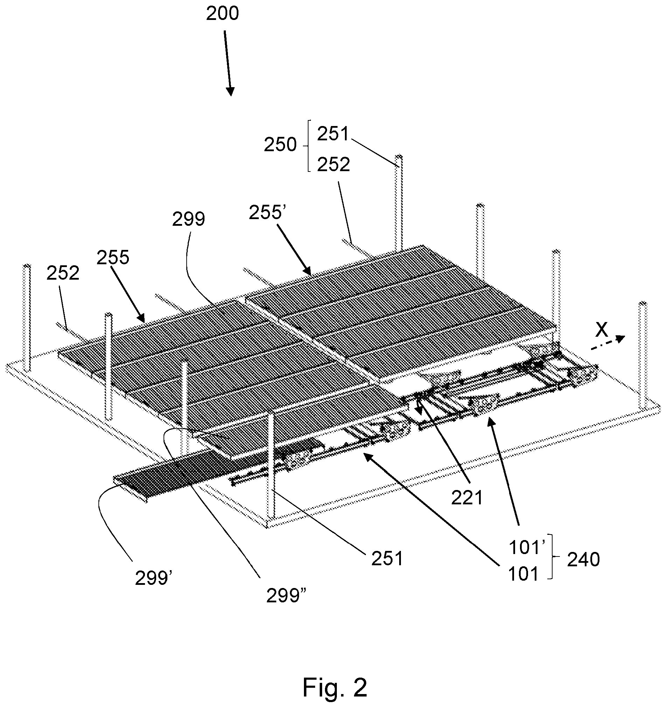

Figure 2 depicts an example of system 200 for storing a plurality of containers 299, in the present example a plurality of rolling containers 299. The system 200 comprises a conveyor system 240 and a frame 250.

In the example depicted in figure 2, the frame 250 comprises a plurality of vertical posts 251 arranged for supporting a plurality of guiding means 252, in the present example guide-bars 252 to define a storing zone 255 and 255'. Said guide-bars 252 are designed to cooperate with a roller system (not depicted) of the rolling containers 299 to guide said rolling containers along the storing zone 255 and 255'.

For the sake of clarity, the conveyor system 240 depicted in figure 2 only comprises two conveyor-pairs 101 and 101', although it also comprises further sections for conveying the plurality of containers 299. The conveyor-pair 101 comprises a lifting-pair 133 and the conveyor-pair 101' comprises a lifting-pair 133'. The conveyor system 240 also defines a conveying zone 221 comprising the conveying zones as defined by each conveyor-pairs 101 and 101'.

The conveyor-pairs 101 and 101' are arranged adjacent to a proximal end 256 of the frame 250 such that the conveyor-pair 101 is adjacent to the storing zone 255 and the conveyor-pair 101' is adjacent to the storing zone 255'. The conveying zone defined by the conveyor-pair 101 defines a first sub-zone of the conveying zone 221, while the conveying zone of the conveyor-pair 101' defines a second sub-zone of said conveying zone 221.

The functioning of the system 200 is the following: the rolling containers 299 may be conveyed in the conveying direction X along the conveying zone 221 towards the first sub-zone of the conveyor-pair 101 and from there or said rolling containers 299 may be lifted by the lifting pair 133 or may be conveyed to the second sub-zone of the conveyor pair 101'.

For the sake of clarity, only the functioning of the conveyor-pair 101 will be explained. The same is to be applied to the conveyor-pair 101'.

The rolling containers 299 are supported by the flanged wheels 120 and 120' of the conveyor-pair 101 when conveyed to the first sub-zone such that said rolling containers 299 define a first vertical position in said first sub-zone. For example, figure 2 depicts a rolling container 299' being conveyed towards the conveyor pair 101 in the first vertical position. It is important to note that because the support-bars 132 and 132' of each lifting-pair 133 and 133' are below the conveying zone, and thus the first sub-zone, in the first position they do not interfere with the rolling containers 299 when being conveyed.

The lifting-pair 133 is arranged for lifting one rolling container 299 supported by the flanged wheels 120 and 120' of said conveyor-pair 101 in the first vertical position when the support-bars 132 and 132 moves from the first position to the second position via the driven system 111 and the actuator 180. For example, figure 2 depicts a rolling container 299" being already supported by the lifting-pair 133 in the second vertical position.

When the rolling container 299" is supported by the support-bars 132 and 132' in the second vertical position, said rolling container 299" is above the first sub-zone of the conveying zone 221. Since the lifting-pairs 133 and 133' have been designed such that the distance in the vertical direction of the rolling container 299' and 299" is bigger than a vertical size of the rolling containers 299, the rolling container 299', as depicted in figure 2, may be conveyed to the first sub-zone in the first vertical position while the lifting-pair 133 is supporting the rolling container 299" in said second vertical position.

It is important to note that the system 200 has been designed such that when the support-bars 132 and 132' of the lifting-pair 133 is in the second position, said support-bars 132 and 132' are aligned with the guide-bars 252 of the storing zone 255. This is achieved via the flange 134 and the further flange arranged in the plate 115. In this way, the container supported in the second vertical position may be easily guided to be transferred to the storing zone 255. The transfer may be carried out by a shuttle (not depicted) arranged in the system 200 for such purpose.

If the lifting-pair 133 of the conveyor-pair 101 does not lift the container when in the first sub-zone, said container may be conveyed to the second sub-zone of the conveyor pair 101'.

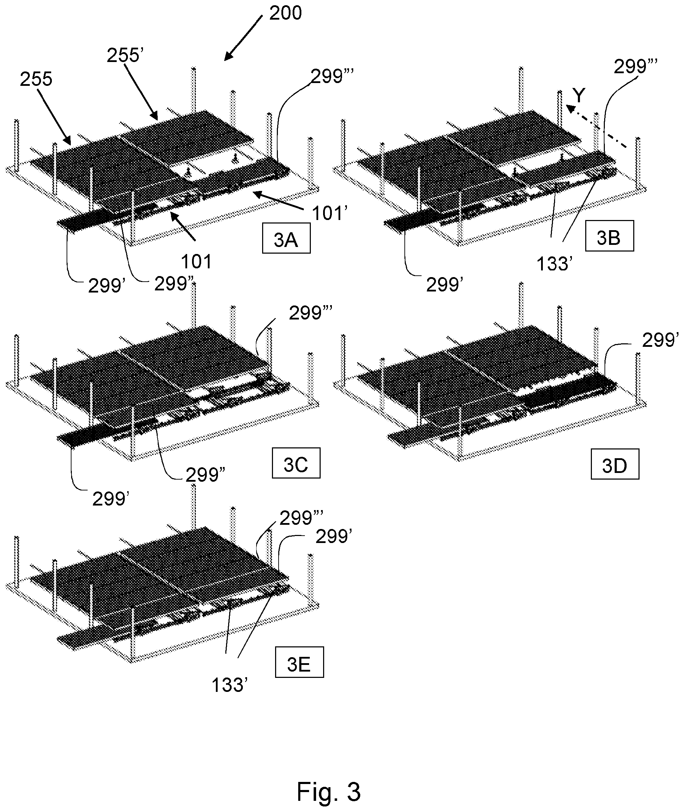

The system 200 may be used in a method for growing plants in a greenhouse. Figures 3A to 3E depicts different steps of the method in which the system 200 is used, although for the sake of clarity neither the greenhouse nor the plants are depicted.

In the method, the plurality of rolling containers 299 support plants intended to grow within the greenhouse. As will be shown below, the system 200 allows for storing containers and, therefore, plants not only in the storing zones 255 and 255' defined by the frame 250, but also by the lifting-pairs 133 and 133'. In this way, more room within the greenhouse will be available for growing and storing plants.

In the method, one container 299 is conveyed by the conveyor system 240 to either the conveyor-pair 101 or the conveyor-pair 101' and from them, said container 299 may be either transferred to the storing zones 255 or 255' or stored in the second vertical position to allow a further rolling conveyor to be conveyed.

As depicted in figures 3A, a rolling container 299" may be already being stored at the second vertical position by the lifting-pair 133, while a rolling container 299''' followed by a rolling container 299' may still be conveyed by the conveying system 240 towards the conveyor-pair 101'.

Figure 3A also depicts the rolling container 299''' in the first vertical position at the second sub-zone defined by the conveyor-pair 101'. From there, said rolling container 299''' is lifted to the second vertical position by the lifting-pair 133', as depicted in figure 3B. Once the rolling container 299''' is in the second vertical position, it may be transferred to the storing zone 255' by being moved in a direction Y, as depicted in figure 3C, for example via a shuttle (not depicted). Finally, the rolling container 299' is conveyed to the conveyor-pair 101' (figure 3D), where it is lifted from the first vertical position to the second vertical position to be stored by the lifting-pair 133' above the conveying zone (figure 3E), such the conveyor system may still be available for conveying further rolling containers.

It is important to note that the lifting pairs of the conveyor pairs may also receive rolling containers from the storing zones of the frame to be conveyed out of the greenhouse. Thus, the lifting-pairs may move said rolling containers from the second vertical position to the first vertical position to be conveyed via the conveyor system.

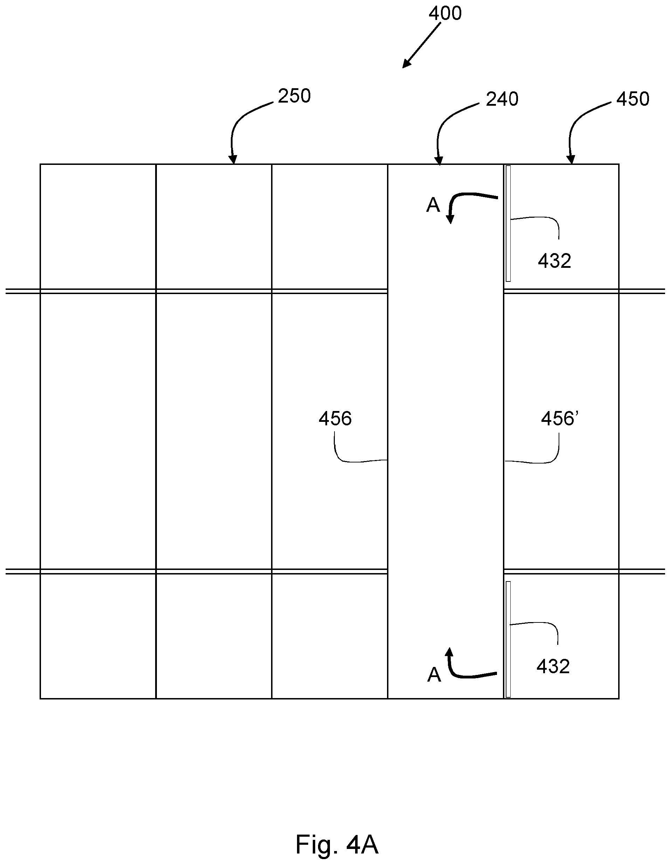

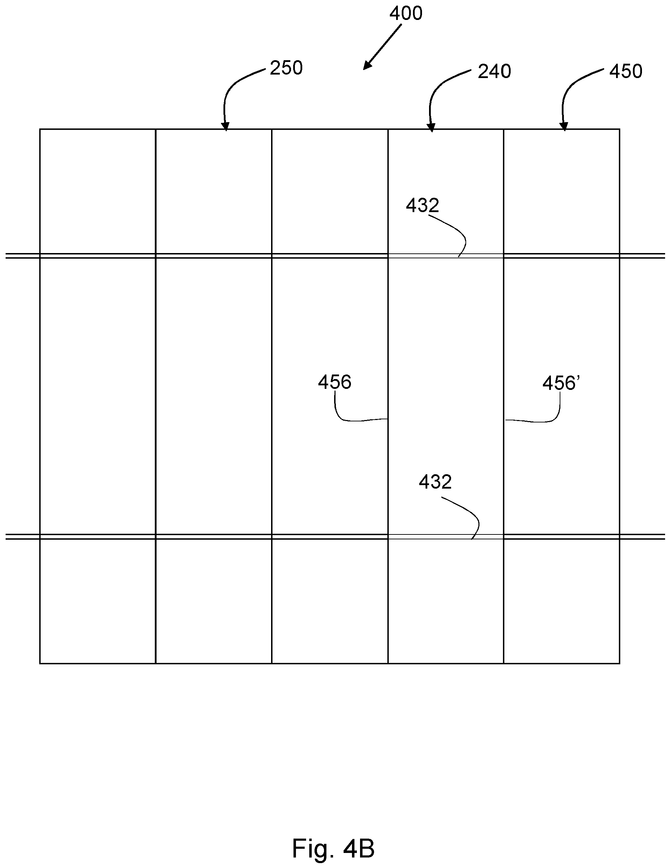

Figures 4A and 4B depict a top view of a further example of a system 400 to be used in the method. In addition to the frame 250 and the conveyor system 240 as in the system 200, the system 400 comprises a further frame 450 arranged for supporting at least one container in a further storing zone 455.

The frame 250 is arranged adjacent to a side of the conveyor system 240 to define a proximal end 456 with respect to said side. The further frame 450 is adjacent to a further side of the conveyor system 240 opposite to the side where the frame 250 is adjacent such that said further frame defines a further proximal end 456' with respect to said further side.

The storing means 432, in the present example support-bars 432, are arranged in the further frame 450 for extending from the further proximal end 465' towards the proximal end 456 of the frame 250, for example in a rotational direction A as depicted in figure 4A. Once a rolling container is supported in the second vertical position, the support-bars rotate to be received by the frame 250 and be supported by said frame, as depicted in figure 4B. The rolling container may be lifted via a lifting-pair 133 or 133' as in the system 200 or by any other lifting means capable of lifting the rolling container when moving from a first position to a second position for lifting said rolling container, as long as said lifting means is capable of returning to the first position for allowing a further rolling container to be conveyed.

It has to be understood that the system is also suitable for taking a container out of the greenhouse or the storing zone, meaning that the system and the conveyor module are arranged to bring down a container from the second vertical position to the first vertical position.

## Claims

1. A method for growing plants in a greenhouse, the method using:
a) at least a container (299) for supporting the plants; and
b) a system (200, 400) for storing the container (299) within the greenhouse for growing the plants, the system (200, 400) comprising:
i) a conveyor system (240) arranged for conveying the container (299) within the greenhouse in a conveying zone (221); and
ii) a frame (250) arranged for storing the container (299) in a storing zone (255), the frame (250) being adjacent to said conveyor system (240);
and the method comprises the steps of:
• arranging the plants in the container (299);
• conveying, via the conveyor system (240), the container (299) supporting the plants along the conveying zone (221) to a sub-zone of the conveying zone (221) adjacent to the frame (250), said sub-zone conveying the container (299) in a first vertical position;
wherein the system (200) further comprises:
i) lifting means (130) for lifting said container (299) to a second vertical position above the sub-zone of the conveying zone such that the distance in the vertical between the first vertical position and the second vertical position is bigger than a vertical size of said container (299) including the plants; and
ii) storing means (132, 432) for storing the container (299) in the second vertical position;
and wherein in the method the container (299) is lifted from the first vertical position to the second vertical position by the lifting means (130) and is then stored in said second vertical position supported by the storing means (132, 432) such that a further container (299) may be conveyed under the container to the sub-zone via the conveying means.

2. The method according to claim 1, wherein the lifting means (130) comprises the storing means (132) such that said lifting means (130) allows for lifting and storing the container (299) at the second vertical position.

3. The method according to anyone of the claims 1 or 2, wherein the frame (250) is arranged adjacent to a side of the conveyor system (240) to define a proximal end (456) with respect to said side; wherein the system (200) also comprises a further frame (450) arranged for supporting at least one container in a further storing zone (455), the further frame (450) being adjacent to a further side of the conveyor system (240) opposite to the side where the frame is adjacent such that said further frame defines a further proximal end (456') with respect to said further side; wherein the storing means (432) are arranged in the further frame (450) for extending from the further proximal end (456') towards the proximal end (456); and wherein in the method, the storing means (432) extends from the further proximal end (456') towards the proximal end (456) when the container (299) has been lifted to the second vertical position and said container is supported by said storing means in said second vertical position.

4. The method according to anyone of the previous claims, wherein the system (200, 400) is arranged such that the storing zone (255) and/or the further storing zone (455) is/are adjacent to the container (299) when said container (299) is supported at the second vertical position and wherein the system (200, 400) further comprises means arranged for moving the container (299) being stored on the second vertical position towards the storing zone (255) and/or further storing zone (455), and in the method said container (299) is moved from the second vertical position to the storing zone (255) or the further storing zone (255') by said means.

5. A system (200, 400) for storing a container (299) within a greenhouse, the system (200, 400) comprising:
i) a conveyor system (240) arranged for conveying the container (299) in a conveying zone (221); and;
ii) a frame (250) arranged for supporting the container (299) in a storing zone (255),
wherein the frame (250) is adjacent to said conveyor system (240) such that the conveying zone defines a sub-zone adjacent to said frame (250), the sub-zone arranged for conveying the container in a first vertical position;
wherein the system (200) further comprises:
i) lifting means (130) for lifting said container (299) from the first vertical position to a second vertical position higher than the first vertical position and above the sub-zone of the conveying zone (221); and
ii) storing means (132, 432) for storing the container (299) in the second vertical position, wherein the storing means (132, 432) is arranged in the system (200, 400) such that said storing means (132, 432) is above the sub-zone when storing the container (299);
wherein the conveyor system (240) comprises at least a conveyor module (100) according to claim 10.

6. The system (400) according to claim 5, wherein the frame (250) is arranged adjacent to a side of the conveyor system (240) to define a proximal end (456) with respect to said side; wherein the system (200) also comprises a further frame (450) arranged for supporting at least one container in a further storing zone (455), the further frame (450) being adjacent to a further side of the conveyor system (240) opposite to the side where the frame is adjacent such that said further frame defines a further proximal end (456') with respect to said further side; and wherein the storing means (432) is arranged in the further frame (450) for extending from the further proximal (456') end towards the proximal end (456).

7. The system (200) according to claim 5, wherein the arm (131) is arranged for rotating about an axis (Y) transverse to a conveying direction (X) provided by the conveying means (120) to move the storing means (132) from the first position to the second position.

8. The system (200, 400) according to anyone of the claims 5 to 7, wherein the system (200) is designed for storing a rolling container (299), the system (200, 400) comprising a bar (252) arranged in the frame (250) and/or the further frame (250') for cooperating with a rolling system of the rolling container (299) to provide guiding when said rolling container (299) is moved along said storing zone (255) or said further storing zone (255').

9. The system (200) according to claim 8 or to claims 7 and 8, wherein the storing means (132) of the lifting means (130) of the conveyor module (100) is a further bar (132) arranged for receiving the rolling system of the rolling container (299) when the arm moves from the first position to the second position and wherein said conveyor module (100) has been arranged such that the further bar (132) is aligned with the bar (252) of the frame (250) and further frame (250') to provide guiding when said rolling container (299) is moved from the second vertical position to said storing zone (255) or said further storing zone (255').

10. A conveyor module (100) for a conveyor system (240), the conveyor module (100) having a structure (110) arranged for supporting:
i) conveying means (120) arranged for conveying a container (299), the conveying means defining a sub-zone suitable for conveying a container (299) in a first vertical position relative to the structure (110);
ii) lifting means (130) comprising an arm (131) connected to a storing means (132), the arm (131) arranged for moving the storing means (132) from a first position to a second position such that said storing means (132) is capable of moving at least a part of the container (299) from the first vertical position to a second vertical position higher than the first vertical position and above the sub-zone;
**characterised in that** the lifting means (130) is arranged in the structure (110) such that the arm (131) is outside the sub-zone when moving the storing means (132, 432) from the first position to the second position.

11. The conveyor module (100) according to claim 10, wherein the arm (131) is arranged for rotating about an axis (Y) transverse to a conveying direction (X) provided by the conveying means (120) to move the storing means (132) from the first position to the second position.

12. The conveyor module (100) according to anyone of claims 10 or 11, wherein the storing means (132) is a bar (132) arranged for receiving a rolling system of a rolling container (299) when said rolling container (299) is in the first vertical position and the arm moves from the first position to the second position.

## Patentansprüche

1. Verfahren zum Anbauen von Pflanzen in einem Gewächshaus, wobei das Verfahren verwendet:
a) mindestens einen Behälter (299) zum Tragen der Pflanzen; und
b) ein System (200, 400) zum Lagern des Behälters (299) innerhalb des Gewächshauses zum Anbauen von Pflanzen, wobei das System (200, 400) umfasst:
i) ein Fördersystem (240), das zum Fördern des Behälters (299) innerhalb des Gewächshauses in einer Förderzone (221) angeordnet ist; und
ii) ein Gestell (250), das zum Lagern des Behälters (299) in einer Lagerzone (255) angeordnet ist, wobei das Gestell (250) angrenzend zu dem Fördersystem (240) angeordnet ist;
und das Verfahren die folgenden Schritte umfasst:
• Anordnen der Pflanzen in dem Behälter (299);
• Fördern des Behälters (299), der die Pflanzen trägt, über das Fördersystem (240) entlang der Förderzone (221) zu einer Teilzone der Förderzone (221), die an das Gestell (250) angrenzt, wobei die Teilzone den Behälter (299) in eine erste vertikale Position fördert;
wobei das System (200) weiterhin umfasst:
i) Hebemittel (130) zum Anheben des Behälters (299) in eine zweite vertikale Position oberhalb der Teilzone der Förderzone, so dass der Abstand in der Vertikalen zwischen der ersten vertikalen Position und der zweiten vertikalen Position größer ist als eine vertikale Größe des Behälters (299) einschließlich der Pflanzen; und
ii) Lagermittel (132, 432) zum Lagern des Behälters (299) in der zweiten vertikalen Position;
und wobei bei dem Verfahren der Behälter (299) durch die Hebemittel (130) aus der ersten vertikalen Position in die zweite vertikale Position angehoben wird und dann in der zweiten vertikalen Position gelagert wird, die durch die Lagermittel (132, 432) getragen wird, so dass ein weiterer Behälter (299) unter dem Behälter über die Fördermittel in die Teilzone befördert werden kann.

2. Verfahren nach Anspruch 1, wobei die Hebemittel (130) die Lagermittel (132) umfassen, so dass die Hebemittel (130) das Anheben und Lagern des Behälters (299) in der zweiten vertikalen Position ermöglicht.

3. Verfahren nach einem der Ansprüche 1 oder 2, wobei das Gestell (250) angrenzend zu einer Seite des Fördersystems (240) angeordnet ist, um ein proximales Ende (456) in Bezug auf diese Seite zu definieren; wobei das System (200) auch ein weiteres Gestell (450) umfasst, das angeordnet ist, um mindestens einen Behälter in einer weiteren Lagerzone (455) zu tragen, wobei das weitere Gestell (450) angrenzend zu einer weiteren Seite des Fördersystems (240) ist, die der Seite gegenüberliegt, an der das Gestell angrenzt, so dass das weitere Gestell ein weiteres proximales Ende (456') in Bezug auf die weitere Seite definiert;
wobei die Lagermittel (432) in dem weiteren Gestell (450) angeordnet sind, um sich von dem weiteren proximalen Ende (456') zu dem proximalen Ende (456) hin zu erstrecken; und
wobei sich bei dem Verfahren die Lagermittel (432) von dem weiteren proximalen Ende (456') in Richtung des proximalen Endes (456) erstrecken, wenn der Behälter (299) in die zweite vertikale Position angehoben worden ist und der Behälter von den Lagermitteln in der zweiten vertikalen Position gehalten wird.

4. Verfahren nach einem der vorstehenden Ansprüche, wobei das System (200, 400) so angeordnet ist, dass die Lagerzone (255) und/oder die weitere Lagerzone (455) dem Behälter (299) benachbart ist/sind, wenn der Behälter (299) in der zweiten vertikalen Position getragen wird und wobei das System (200, 400) weiterhin Mittel umfasst, die zum Bewegen des Behälters (299), der in der zweiten vertikalen Position gelagert wird, in Richtung der Lagerzone (255) und/oder der weiteren Lagerzone (455) angeordnet sind, und bei dem Verfahren der Behälter (299) von der zweiten vertikalen Position zu der Lagerzone (255) oder der weiteren Lagerzone (255') durch die Mittel bewegt wird.

5. System (200, 400) zum Lagern eines Behälters (299) innerhalb eines Gewächshauses, wobei das System (200, 400) umfasst:
i) ein Fördersystem (240), das zum Fördern des Behälters (299) in einer Förderzone (221) angeordnet ist; und;
ii) ein Gestell (250), das zum Tragen des Behälters (299) in einer Lagerzone (255) angeordnet ist,
wobei das Gestell (250) an das Fördersystem (240) angrenzt, so dass die Förderzone eine Teilzone angrenzend an das Gestell (250) definiert, wobei die Teilzone zum Fördern des Behälters in einer ersten vertikalen Position angeordnet ist;
wobei das System (200) weiterhin umfasst:
i) Hebemittel (130) zum Anheben des Behälters (299) aus der ersten vertikalen Position in eine zweite vertikale Position, die sich höher als die erste vertikale Position und oberhalb der Teilzone der Förderzone (221) befindet; und
ii) Lagermittel (132, 432) zum Lagern des Behälters (299) in der zweiten vertikalen Position, wobei die Lagermittel (132, 432) in dem System (200, 400) so angeordnet sind, dass sich die Lagermittel (132, 432) beim Lagern des Behälters (299) oberhalb der Teilzone befinden;
wobei das Fördersystem (240) mindestens ein Fördermodul (100) nach Anspruch 10 umfasst.

6. System (400) nach Anspruch 5, wobei das Gestell (250) angrenzend an eine Seite des Fördersystems (240) angeordnet ist, um ein proximales Ende (456) in Bezug auf diese Seite zu definieren; wobei das System (200) auch ein weiteres Gestell (450) umfasst, das zum Tragen mindestens eines Behälters in einer weiteren Lagerzone (455) angeordnet ist, wobei das weitere Gestell (450) an eine weitere Seite des Fördersystems (240) angrenzt, die der Seite gegenüberliegt, an die das Gestell angrenzt, so dass das weitere Gestell ein weiteres proximales Ende (456') in Bezug auf die weitere Seite definiert; und wobei die Lagermittel (432) in dem weiteren Gestell (450) angeordnet sind, um sich von dem weiteren proximalen Ende (456') zu dem proximalen Ende (456) zu erstrecken.

7. System (200) nach Anspruch 5, wobei der Arm (131) zum Rotieren um eine Achse (Y) quer zu einer Förderrichtung (X) angeordnet ist, die von den Fördermitteln (120) bereitgestellt wird, um die Lagermittel (132) von der ersten Position in die zweite Position zu bewegen.

8. System (200, 400) nach einem der Ansprüche 5 bis 7, wobei das System (200) zum Lagern eines Rollbehälters (299) ausgebildet ist, wobei das System (200, 400) eine in dem Gestell (250) und/oder dem weiteren Gestell (250') angeordnete Stange (252) aufweist, die mit einem Rollsystem des Rollbehälters (299) zusammenwirkt, um eine Führung bereitzustellen, wenn der Rollbehälter (299) entlang der Lagerzone (255) oder der weiteren Lagerzone (255') bewegt wird.

9. System (200) nach Anspruch 8 oder den Ansprüchen 7 und 8, wobei die Lagermittel (132) der Hebemittel (130) des Fördermoduls (100) eine weitere Stange (132) sind, die zur Aufnahme des Rollsystems des Rollbehälters (299) angeordnet ist, wenn sich der Arm von der ersten Position zur zweiten Position bewegt, und wobei das Fördermodul (100) so angeordnet ist, dass die weitere Stange (132) mit der Stange (252) des Gestells (250) und des weiteren Gestells (250') ausgerichtet ist, um eine Führung bereitzustellen, wenn der Rollbehälter (299) von der zweiten vertikalen Position zu der Lagerzone (255) oder der weiteren Lagerzone (255') bewegt wird.

10. Fördermodul (100) für ein Fördersystem (240), wobei das Fördermodul (100) eine Struktur (110) aufweist, die angeordnet ist zum Tragen von:
i) Fördermitteln (120), die zum Fördern eines Behälters (299) angeordnet sind, wobei die Fördermittel eine Teilzone definieren, die zum Fördern eines Behälters (299) in einer ersten vertikalen Position relativ zu der Struktur (110) geeignet ist;
ii) Hebemitteln (130), die einen Arm (131) umfassen, der mit Lagermitteln (132) verbunden ist, wobei der Arm (131) angeordnet ist, um die Lagermittel (132) von einer ersten Position in eine zweite Position zu bewegen, so dass die Lagermittel (132) in der Lage sind, mindestens einen Teil des Behälters (299) von der ersten vertikalen Position in eine zweite vertikale Position zu bewegen, die sich höher als die erste vertikale Position und oberhalb der Teilzone befindet;
**dadurch gekennzeichnet, dass** die Hebemittel (130) in der Struktur (110) so angeordnet sind, dass sich der Arm (131) außerhalb der Teilzone befindet, wenn die Lagermittel (132, 432) von der ersten Position zur zweiten Position bewegt werden.

11. Fördermodul (100) nach Anspruch 10, wobei der Arm (131) zum Rotieren um eine Achse (Y) quer zu einer von den Fördermitteln (120) vorgesehenen Förderrichtung (X) angeordnet ist, um die Lagermittel (132) von der ersten Position in die zweite Position zu bewegen.

12. Fördermodul (100) nach einem der Ansprüche 10 oder 11, wobei das Lagermittel (132) eine Stange (132) ist, die zur Aufnahme eines Rollsystems eines Rollbehälters (299) angeordnet ist, wenn sich der Rollbehälter (299) in der ersten vertikalen Position befindet und der Arm sich von der ersten Position zur zweiten Position bewegt.

## Revendications

1. Procédé destiné à la culture de plantes dans une serre, le procédé faisant usage de :
a) au moins un récipient (299) destiné à supporter les plantes ; et
b) un système (200, 400) destiné à entreposer le récipient (299) à l'intérieur de la serre pour la culture des plantes, le système (200, 400) comprenant :
i) un système de transport (240) qui est conçu pour transporter le récipient (299) à l'intérieur de la serre dans une zone de transport (221) ; et
ii) un bâti (250) qui est conçu pour l'entreposage du récipient (299) dans une zone d'entreposage (255), le bâti (250) étant disposé dans une position adjacente audit système de transport (240) ;
et le procédé comprend les étapes dans lesquelles :
- on arrange les plantes dans le récipient (299) ;
- on transporte, par l'intermédiaire du système de transport (240), le récipient (299) qui supporte les plantes le long de la zone de transport (221) jusqu'à une zone secondaire de la zone de transport (221) dans une position adjacente au bâti (250), ladite zone secondaire transportant le récipient (299) dans une première position verticale ; dans lequel le système (200) comprend en outre :
i) un moyen de levage (130) destiné à soulever ledit récipient (299) jusqu'à un deuxième position verticale située au-dessus de la zone secondaire de la zone de transport d'une manière telle que la distance à la verticale entre la première position verticale et la deuxième position verticale est supérieure à une dimension verticale dudit récipient (299), les plantes comprises ; et
ii) un moyen d'entreposage (132, 432) destiné à entreposer le récipient (299) dans la deuxième position verticale ;
et dans lequel, dans le procédé, le récipient (299) est soulevé à partir de la première position verticale jusqu'à la deuxième position verticale par l'intermédiaire du moyen de levage (130) et est ensuite entreposé dans ladite deuxième position verticale en étant supporté par le moyen de d'entreposage (132, 432), d'une manière telle qu'un récipient supplémentaire (299) peut être transporté en dessous du récipient dans la direction de la zone secondaire par l'intermédiaire du moyen de transport.

2. Procédé selon la revendication 1, dans lequel le moyen de levage (130) comprend le moyen d'entreposage (132) d'une manière telle que ledit moyen de levage (130) permet de soulever et d'entreposer le récipient (299) à la deuxième position verticale.

3. Procédé selon l'une quelconque des revendications 1 ou 2, dans lequel le bâti (250) est disposé dans une position adjacente à un côté du système de transport (240) dans le but de définir une extrémité proximale (456) par rapport audit côté ; dans lequel le système (200) comprend également un bâti supplémentaire (450) qui est conçu pour supporter au moins un récipient dans une zone d'entreposage supplémentaire (455), le bâti supplémentaire (455) étant disposé dans une position adjacente à un côté supplémentaire du système de transport (240), qui est opposé au côté auquel le bâti est adjacent, d'une manière telle que ledit bâti supplémentaire définit une extrémité proximale supplémentaire (456') par rapport audit côté supplémentaire ; dans lequel le moyen d'entreposage (432) est disposé dans le bâti supplémentaire (450) de manière à s'étendre à partir de l'extrémité proximale supplémentaire (456') dans la direction de l'extrémité proximale (456) ; et dans lequel, dans le procédé, le moyen d'entreposage (432) s'étend à partir de l'extrémité proximale supplémentaire (456') dans la direction de l'extrémité proximale (456) lorsque le récipient (299) a été soulevé dans la direction de la deuxième position verticale et lorsque ledit récipient est supporté par ledit moyen d'entreposage dans ladite deuxième position verticale.

4. Procédé selon l'une quelconque des revendications précédentes, dans lequel le système (200, 400) est conçu d'une manière telle que la zone d'entreposage (255) et/ou la zone d'entreposage supplémentaire (455) est/sont disposées dans une position adjacente au récipient (299) lorsque ledit récipient (299) est supporté à la deuxième position verticale ; et dans lequel le système (200, 400) comprend en outre un moyen qui est conçu pour le déplacement du récipient (219), qui est en train d'être entreposé à la deuxième position verticale, dans la direction de la zone d'entreposage (255) et/ou dans la zone d'entreposage supplémentaire (455) ; et, dans le procédé, on soumet ledit récipient (299) à un déplacement depuis la deuxième position verticale jusqu'à la zone d'entreposage (255) ou jusqu'à la zone d'entreposage supplémentaire (255') par l'intermédiaire du moyen en question.

5. Système (200, 400) destiné à un récipient (299) à l'intérieur d'une serre, le système (200, 400) comprenant :
i) un système de transport (240) qui est conçu pour transporter le récipient (299) dans une zone de transport (221) ; et
ii) un bâti (250) qui est conçu pour supporter le récipient (299) dans une zone d'entreposage (255) ;
dans lequel le bâti (250) est disposé dans une position adjacente audit système de transport (240) d'une manière telle que la zone de transport définit une zone secondaire dans une position adjacente audit bâti (250), la zone secondaire étant conçue pour transporter le récipient dans une première position verticale ;
dans lequel le système (200) comprend en outre :
i) un moyen de levage (130) destiné à soulever ledit récipient (299) depuis la première position verticale jusqu'à une deuxième position verticale située plus haut que la première position verticale et au-dessus de la zone secondaire de la zone de transport (221) ; et
ii) un moyen d'entreposage (132, 432) destiné à entreposer le récipient (299) dans la deuxième position verticale; dans lequel le moyen d'entreposage (132, 432) est disposé dans le système (200, 400) d'une manière telle que ledit moyen d'entreposage (132, 432) est disposé au-dessus de la zone secondaire lors de l'entreposage du récipient (299) ;
dans lequel le système de transport (240) comprend au moins un module de transport (100) selon la revendication 10.

6. Système (400) selon la revendication 5, dans lequel le bâti (250) est disposé dans une position adjacente à un côté du système de transport (240) dans le but de définir une extrémité proximale (456) par rapport audit côté ; dans lequel le système (200) comprend également un bâti supplémentaire (450) qui est conçu pour supporter au moins un récipient dans une zone d'entreposage supplémentaire (455), le bâti supplémentaire (450) étant disposé dans une position adjacente à un côté supplémentaire du système de transport (240), qui est opposé au côté auquel le bâti est adjacent, d'une manière telle que ledit bâti supplémentaire définit une extrémité proximale supplémentaire (456') par rapport audit côté supplémentaire ; et dans lequel le moyen d'entreposage (432) est disposé dans le bâti supplémentaire (450) de manière à s'étendre à partir de l'extrémité proximale supplémentaire (456') dans la direction de l'extrémité proximale (456).

7. Système (200) selon la revendication 5, dans lequel le bras (131) est conçu pour effectuer des rotations autour d'un axe (Y) en position transversale par rapport à une direction de transport (X) fournie par le moyen de transport (120) dans le but de faire passer le moyen d'entreposage (132) de la première position à la deuxième position.

8. Système (200, 400) selon l'une quelconque des revendications 5 à 7, dans lequel le système (200) est conçu pour l'entreposage d'un récipient roulant (299), le système (200, 400) comprenant une barre (252) qui est disposée dans le bâti (250) et/ou dans le bâti supplémentaire (250') à des fins de coopération avec un système de roulement du récipient roulant (299) afin de procurer un guidage lorsque ledit récipient roulant (299) est soumis à un déplacement le long de ladite zone d'entreposage (255) ou le long de ladite zone d'entreposage supplémentaire (255').

9. Système (200) selon la revendication 8 ou selon les revendications 7 et 8, dans lequel le moyen d'entreposage (132) du moyen de levage (130) du module de transport (100) représente une barre supplémentaire (132) qui est conçue pour recevoir le système de roulement du récipient roulant (299) lorsque le bras passe de la première position à la deuxième position ; et dans lequel ledit module de transport (100) a été conçu d'une manière telle que la barre supplémentaire (132) est mise en alignement avec la barre (252) du bâti (250) et du bâti supplémentaire (250') de façon à procurer un guidage lorsque ledit récipient roulant (299) passe de la deuxième position verticale à ladite zone d'entreposage (255) ou à ladite zone d'entreposage supplémentaire (255').

10. Module de transport (100) pour un système de transport (240), le module de transport possédant une structure (110) qui est conçue pour supporter :
i) un moyen de transport (120) qui est conçu pour transporter un récipient (299), le moyen de transport définissant une zone secondaire qui est appropriée pour le transport d'un récipient (299) dans une première position verticale par rapport à la structure (110) ;
ii) un moyen de levage (130) qui comprend un bras (131) qui est relié à un moyen d'entreposage (132), le bras (131) étant conçu pour faire passer le moyen d'entreposage (132) d'une première position à une deuxième position d'une manière telle que ledit moyen d'entreposage (132) est capable de faire passer au moins une partie du récipient (299) de la première position verticale à une deuxième position verticale qui est située plus haut que la première position verticale et qui est située au-dessus de la zone secondaire ;
**caractérisé en ce que** le moyen de levage (130) est disposé dans la structure (110) d'une manière telle que le bras (131) est situé à l'extérieur de la zone secondaire lors du déplacement du moyen d'entreposage (132, 432) qui passe de la première position à la deuxième position.

11. Module de transport (100) selon la revendication 10, dans lequel le bras (131) est conçu pour effectuer des rotations autour d'un axe (Y) en position transversale par rapport à une direction de transport (X) fournie par le moyen de transport (120) dans le but de faire passer le moyen d'entreposage (132) de la première position à la deuxième position.

12. Module de transport (100) selon l'une quelconque des revendications 10 ou 11, dans lequel le moyen d'entreposage (132) représente une barre (132) qui est conçue pour la réception d'un système de roulement d'un récipient roulant (299) lorsque ledit récipient roulant (299) se trouve dans la première position verticale et lorsque le bras passe de la première position à la deuxième position.
